# EUROPÄISCHE PATENTSCHRIFT

(11) **EP 4 289 130 B1**
(45) Veröffentlichungstag und Bekanntmachung des Hinweises auf die Patenterteilung: **02.09.2026**
(21) Anmeldenummer: 22702185.4
(22) Anmeldetag: 19.01.2022
(51) Int. Cl.: H04N 23/52, H04N 23/55, H04N 23/57, G03B 17/55, G02B 27/00, B60R 11/04

(54) **VERFAHREN ZUR HERSTELLUNG EINES KAMERAMODULS, VERWENDUNG EINES KONTAKTELEMENTS**
METHOD FOR PRODUCING A CAMERA MODULE, USE OF A CONTACT ELEMENT
PROCÉDÉ DE FABRICATION D'UN MODULE DE CAMÉRA, UTILISATION D'UN ÉLÉMENT DE CONTACT

(30) Priorität: 05.02.2021 DE 102021201072
(43) Veröffentlichungstag der Anmeldung: 13.12.2023
(73) Patentinhaber: Robert Bosch GmbH, 70442 Stuttgart (DE)
(72) Erfinder: BREIDERT, Joachim, 71701 Schwieberdingen (DE)
(86) Internationale Anmeldenummer: PCT/EP2022/051077
(87) Internationale Veröffentlichungsnummer: WO 2022/167220

(56) Entgegenhaltungen:
- US-A1- 2018 176 431
- US-A1- 2019 033 690
- US-A1- 2019 302 576
- US-A1- 2020 314 311

## Beschreibung

Die Erfindung betrifft ein Verfahren zur Herstellung eines Kameramoduls, das ein Objektiv mit integrierter Heizeinrichtung sowie ein Gehäuse mit einer Leiterplatte und einem Bildsensor aufweist. Das Kameramodul kann insbesondere in einem Kraftfahrzeug zum Einsatz gelangen, beispielsweise zur Überwachung des Umfelds des Kraftfahrzeugs.

Ferner wird die Verwendung eines Kontaktelements zur elektrischen Kontaktierung einer in ein Objektiv eines Kameramoduls integrierten Heizeinrichtung angegeben.

### Stand der Technik

Ein zur Umfeldüberwachung eingesetztes Kameramodul ist Umwelteinflüssen ausgesetzt, so dass es zu einem feuchten Niederschlag und/oder zu einer Eisbildung auf einer optischen Linse des Objektivs kommen kann. Ist dies der Fall, besteht die Gefahr, dass der Bildsensor des Kameramoduls keine oder lediglich schlechte Signale erhält. Dies gilt es zu vermeiden, beispielsweise mit Hilfe einer in das Objektiv integrierten Heizeinrichtung.

Kameramodule, die über ein Objektiv mit integrierter Heizeinrichtung verfügen, sind beispielsweise aus der US 2020/314311 A1, der US 2018/176431 A1, der US 2019/033690 A1 sowie der US 2019/302576 A1 bekannt.

Die in das Objektiv integrierte Heizeinrichtung muss elektrisch kontaktiert werden. Hierzu können Kontaktelemente eingesetzt werden, die eine Verbindung der Heizeinrichtung mit einer in einem Gehäuse aufgenommenen Leiterplatte des Kameramoduls herstellen. Da nach dem Fügen des Kameramoduls, insbesondere nach dem Einsetzen des Objektivs in das Gehäuse, die Zugänglichkeit der Kontaktelemente bzw. der Leiterplatte nicht mehr gewährleistet ist, erfolgt die elektrische Kontaktierung der Heizeinrichtung in der Regel bereits vor dem Einsetzen oder während des Einsetzens. Die Verwendung flexibler Kontaktelemente, wie beispielsweise Folienleiter oder Kabel, ermöglicht dabei einen Toleranzausgleich, beispielsweise, um das Objektiv in Bezug auf einen Bildsensor auszurichten. Die Verwendung flexibler Kontaktelemente besitzt ferner den Vorteil, dass bei einer anschließenden Verklebung des Objektivs mit dem Gehäuse die Klebeverbindung zumindest annähernd kraftfrei bleibt. Als nachteilig erweist sich jedoch, dass die erzielbaren Fügegeschwindigkeiten bei Verwendung flexibler bzw. biegeweicher Folienleiter oder Kabel begrenzt ist.

Der Erfindung liegt daher die Aufgabe zugrunde, die elektrische Kontaktierung einer in ein Objektiv integrierten Heizeinrichtung sicherer und zugleich einfacher zu gestalten. Die Aufgabe wird gelöst durch das in Anspruch 1 angegebene Verfahren zur Herstellung eines Kameramoduls sowie durch die in Anspruch 6 angegebene Verwendung.

### Offenbarung der Erfindung

Das vorgeschlagene Verfahren dient der Herstellung eines Kameramoduls, das ein Objektiv mit integrierter Heizeinrichtung sowie ein Gehäuse mit einer Leiterplatte und einem Bildsensor aufweist. Das Verfahren umfasst die folgenden Schritte:
- Einsetzen des Objektivs in das Gehäuse,
- Ausrichten des Objektivs in Bezug auf den Bildsensor,
- Fixieren des Objektivs durch Herstellen einer Klebeverbindung mit dem Gehäuse,
- elektrisches Kontaktieren der in das Objektiv integrierten Heizeinrichtung mit Hilfe vorgespannter und/oder aktivierbarer, insbesondere thermisch oder elektrisch aktivierbarer, Kontaktelemente, die durch Lösen einer Spannvorrichtung und/oder durch Aktivieren, insbesondere durch thermisches oder elektrisches Aktivieren, in elektrisch leitenden Kontakt mit außenumfangseitig am Objektiv ausgebildeten Kontaktflächen gebracht werden.

Die in das Objektiv integrierte Heizeinrichtung wird demzufolge erst nach dem Einsetzen, Ausrichten und Fixieren des Objektivs in Bezug auf das Gehäuse elektrisch kontaktiert. Das heißt zu einem Zeitpunkt, in dem die zum Fixieren des Objektivs eingesetzte Klebeverbindung soweit ausgehärtet ist, dass sie Kräfte aufnehmen kann. Die Klebeverbindung und damit die Position des Objektivs in Bezug auf den Bildsensor bleiben somit durch die noch herzustellende elektrische Kontaktierung der Heizeinrichtung unbeeinflusst.

Das elektrische Kontaktieren der Heizeinrichtung nachdem das Objektiv in das Gehäuse eingesetzt, ausgerichtet und fixiert worden ist, wird durch die vorgeschlagene Verwendung vorgespannter und/oder aktivierbarer, insbesondere thermisch oder elektrisch aktivierbarer, Kontaktelemente ermöglicht. Denn diese können durch Lösen einer Spannvorrichtung und/oder durch Aktivieren, insbesondere durch thermisches oder elektrisches Aktivieren, an die am Objektiv vorgesehenen Kontaktflächen angelegt werden. Das heißt, dass das Anlegen berührungslos erfolgt, so dass die fehlende Zugänglichkeit der Kontaktelemente kein Problem darstellt.

Bevorzugt werden zur Durchführung des vorgeschlagenen Verfahrens Kontaktelemente verwendet, die als Federarme ausgebildet sind. Mit Hilfe derartiger Kontaktelemente kann in einfacher Weise die Distanz zwischen der Heizeinrichtung und der Leiterplatte überbrückt werden. Ferner können als Federarme ausgebildete Kontaktelemente in einfacher Weise mit Hilfe einer Spannvorrichtung vorgespannt werden.

Ferner bevorzugt werden Kontaktelemente verwendet, die sich am Objektiv diametral gegenüberliegen. Die Kontaktelemente können in diesem Fall mit Hilfe der Spannvorrichtung radial vorgespannt werden, so dass ein Lösen der Spannvorrichtung automatisch zur Anlage der Kontaktelemente an den am Objektiv vorgesehenen Kontaktflächen führt. Die Kontaktflächen sind hierzu bevorzugt in entsprechender Weise, das heißt diametral gegenüberliegend, am Objektiv angeordnet.

Des Weiteren wird vorgeschlagen, dass die Kontaktelemente andernends, das heißt an ihren von den Kontaktflächen des Objektivs abgewandten Enden, mit der Leiterplatte elektrisch leitend verbunden, vorzugsweise verschweißt oder verlötet, sind. Die Kontaktelemente und die Leiterplatte können somit eine vormontierte Einheit ausbilden. Diese erleichtert eine optische Kontrolle der elektrisch leitenden Verbindung der Kontaktelemente mit der Leiterplatte, da die Vormontage vor dem Einsetzen des Objektivs in das Gehäuse erfolgen kann.

Gemäß einer ersten bevorzugten Ausführungsform der Erfindung werden mit Hilfe der Spannvorrichtung vorgespannte Kontaktelemente verwendet. Durch Lösen der Spannvorrichtung werden dann die Kontaktelemente zur Anlage an den Kontaktflächen des Objektivs gebracht.

Die Spannvorrichtung kann hierzu - zumindest bereichsweise - haken- oder ringförmig ausgeführt sein. Mit Hilfe einer zumindest bereichsweise haken- oder ringförmig ausgebildeten Spannvorrichtung können die vorgespannten Kontaktelemente solange zurückgehalten werden, bis das Objektiv in das Gehäuse eingesetzt, in Bezug auf den Bildsensor ausgerichtet und mit Hilfe der Klebeverbindung fixiert worden ist.

Sofern die Spannvorrichtung zumindest bereichsweise hakenförmig ausgebildet ist, kann sie in verriegelndem Eingriff mit mindestens einem Kontaktelement gebracht werden. Durch Entriegeln kann die Spanvorrichtung gelöst werden. Vorzugsweise umfasst die Spannvorrichtung mehrere Hakenelemente, wobei weiterhin vorzugsweise die Anzahl der Hakenelemente der Anzahl der vorzuspannenden Kontaktelemente entspricht.

Sofern die Spannvorrichtung zumindest bereichsweise ringförmig ausgebildet ist, kann sie derart angeordnet werden, dass sie die Kontaktelemente auf Abstand gegenüber den am Objektiv vorgesehenen Kontaktflächen hält. Vorzugsweise umfasst die Spannvorrichtung mindestens einen Ring, der gegenüber den Kontaktelementen axial verschiebbar ist. Zum Lösen der Spannvorrichtung wird dann der Ring axial verschoben.

Alternativ oder ergänzend wird vorgeschlagen, dass eine Spannvorrichtung verwendet wird, die - zumindest bereichsweise - aus einem Bi-Metall, einem Formgedächtnismaterial, beispielsweise einer Formgedächtnislegierung oder einem Formgedächtnispolymer, oder einem Schrumpfmaterial gefertigt ist. Die Spannvorrichtung kann somit von außen, das heißt berührungslos, aktiviert bzw. gelöst werden. Beispielsweise kann durch Aktivieren, insbesondere thermisches oder elektrisches Aktivieren, eines ersten Teils der Spannvorrichtung eine Verformung dieses Teils bewirkt werden, die dann in der Folge eine Bewegung eines weiteren Teils, beispielsweise eines axial verschiebbaren Rings, der Spannvorrichtung auslöst.

Die zum Vorspannen der Kontaktelemente eingesetzte Spannvorrichtung wird demzufolge bevorzugt durch Verschieben und/oder Aktivieren, insbesondere durch thermisches oder elektrisches Aktivieren, gelöst.

Gemäß einer weiteren bevorzugten Ausführungsform der Erfindung werden aktivierbare, insbesondere thermisch oder elektrisch aktivierbare, Kontaktelemente verwendet, die zumindest bereichsweise aus einem Bi-Metall, einem Formgedächtnismaterial, beispielsweise einer Formgedächtnislegierung oder einem Formgedächtnispolymer, oder aus einem Schrumpfmaterial gefertigt sind. In diesem Fall ist eine separate Spannvorrichtung zum Vorspannen der Kontaktelemente entbehrlich, da diese selbst zur Herstellung der elektrischen Kontaktierung aktivierbar, insbesondere thermisch oder elektrisch aktivierbar, sind. Das Aktivieren der Kontaktelemente bewirkt eine Verformung, durch welche die Kontaktelemente zur Anlage an den Kontaktflächen des Objektivs gelangen. Die Verformung kann vorzugsweise nur in eine Richtung erzielt werden, so dass die hierüber hergestellte elektrische Kontaktierung der Heizeinrichtung von Dauer ist. Das heißt, dass vorzugsweise ein Material verwendet wird, das nach der Verformung seine Form beibehält und sich nicht wieder in seine Ausgangsform zurückbewegt.

Beispielsweise können Schmelzdrähte als thermisch oder elektrisch aktivierbare Kontaktelemente verwendet werden, mittels welcher nach einer thermischen oder elektrischen Aktivierung ein elektrisch leitender Kontakt mit den Kontaktflächen des Objektivs herstellbar ist.

Darüber hinaus wird zur elektrischen Kontaktierung einer in ein Objektiv eines Kameramoduls integrierten Heizeinrichtung die Verwendung eines Kontaktelements vorgeschlagen, das zumindest bereichsweise aus einem Bi-Metall, einem Formgedächtnismaterial, beispielsweise aus einer Formgedächtnislegierung oder einem Formgedächtnispolymer, oder aus einem Schrumpfmaterial gefertigt und an einem Ende elektrisch leitend mit einer Leiterplatte verbunden, vorzugsweise verschweißt oder verlötet, ist. Dieses ermöglicht in einem erfindungsgemäßen Verfahren in einfacher Weise eine sichere elektrische Kontaktierung der Heizeinrichtung.

Bevorzugte Ausführungsformen der Erfindung werden nachfolgend anhand der beigefügten Zeichnungen näher erläutert. Diese zeigen:
- Figur 1: einen schematischen Längsschnitt durch ein Kameramodul, das nach einem ersten erfindungsgemäßen Verfahren herstellbar ist,
- Figur 2: einen vergrößerten Ausschnitt der Fig. 1,
- Figur 3: einen schematischen Längsschnitt durch ein Kameramodul, das nach einem zweiten erfindungsgemäßen Verfahren herstellbar ist,
- Figur 4: einen schematischen Längsschnitt durch ein Kameramodul, das nach einem dritten erfindungsgemäßen Verfahren herstellbar ist, und
- Figur 5: einen schematischen Längsschnitt durch ein Kameramodul, das nach einem vierten erfindungsgemäßen Verfahren herstellbar ist.

### Ausführliche Beschreibung der Zeichnungen

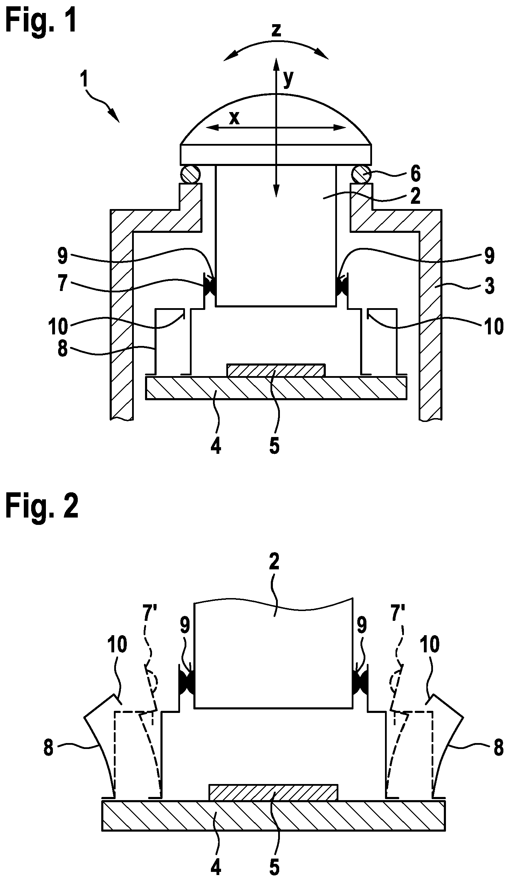

Figur 1 zeigt ein Kameramodul 1 mit einem Objektiv 2, in das eine Heizeinrichtung (nicht dargestellt) integriert ist. Zur elektrischen Kontaktierung der Heizeinrichtung sind außenumfangseitig am Objektiv 2 zwei Kontaktflächen 9 vorgesehen, die sich am Objektiv 2 diametral gegenüberliegen. Das Objektiv 2 ist in ein Gehäuse 3 eingesetzt, so dass die Kontaktflächen 9 innerhalb des Gehäuses 3 zu liegen kommen. Das Objektiv 2 ist zudem mit dem Gehäuse 3 über eine Klebeverbindung 6 verklebt. Die Klebeverbindung 6 kann erst nach dem dem Ausrichten des Objektivs 2 in Bezug auf einen im Gehäuse 3 aufgenommenen Bildsensor 5 hergestellt werden. Dabei wird das Objektiv 2 in verschiedene Richtungen x, y, z bewegt bzw. geschwenkt. Um diese Bewegungen zu ermöglichen, wird die in das Objektiv 2 integrierte Heizeinrichtung erst nach dem Ausrichten des Objektivs 2 und nach dem Herstellen der Klebeverbindung 6 elektrisch kontaktiert.

Die elektrische Kontaktierung ist in der Figur 1 über zwei sich diametral am Objektiv 2 gegenüberliegende Kontaktelemente 7 hergestellt, die andernends mit einer den Bildsensor 5 aufnehmenden Leiterplatte 4 elektrisch leitend verbunden sind. Wie insbesondere der Figur 2 zu entnehmen ist, sind die Kontaktelemente 7 als Federarme ausgeführt, die mit Hilfe einer Spannvorrichtung 8 vorgespannt werden können, so dass ein Abstand zu den am Objektiv 2 vorgesehenen Kontaktflächen 9 eingehalten wird. Die Spannvorrichtung 8 weist hierzu zwei federarmartige Elemente auf, die radial außen in Bezug auf die Kontaktelemente 7 angeordnet sind und an ihren freien Enden Hakenelemente 10 aufweisen. Diese können in Eingriff mit den Kontaktelementen 7 gebracht werden, so dass diese die Kontaktelemente 7 zurückhalten, und zwar vorzugsweise solange bis die Klebeverbindung 6 zwischen dem Objektiv 2 und dem Gehäuse 3 ausgehärtet ist (siehe gestrichelte Darstellung der Kontaktelemente 7'). Wird dann die Spannvorrichtung 8 gelöst, gelangen die vorgespannten Kontaktelemente 7 zur Anlage an den Kontaktflächen 9 des Objektivs 2 und die elektrische Kontaktierung der Heizeinrichtung ist hergestellt.

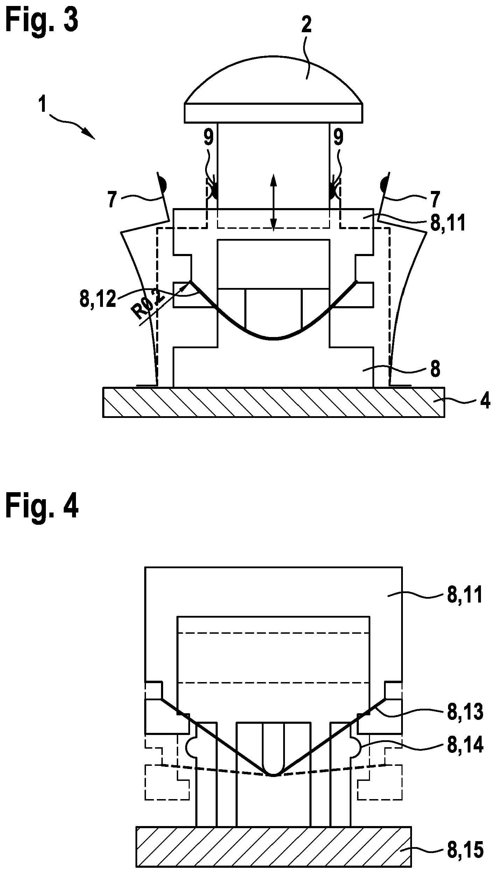

Der Figur 3 ist ein weiteres Kameramodul 1 zu entnehmen, das ein Objektiv 2 mit integrierter Heizeinrichtung (nicht dargestellt) umfasst. Dargestellt sind wiederum nur die außenumfangseitig am Objektiv 2 vorgesehenen Kontaktflächen 9 zur elektrischen Kontaktierung der Heizeinrichtung. Ebenfalls nicht dargestellt ist das Gehäuse 3 des Kameramoduls 1, das analog dem Gehäuse 3 des Kameramoduls 1 der Figur 1 ausgebildet und mit dem Objektiv 2 über eine Klebeverbindung 6 verbunden ist.

In der Figur 3 sind als Federarme ausgebildete Kontaktelemente 7 dargestellt, die durch Lösen einer Spannvorrichtung 8 in Kontakt mit den am Objektiv 2 vorgesehenen Kontaktflächen 9 bringbar sind. Die Spannvorrichtung 8 weist hierzu einen Ring 11 auf, der axial verschiebbar gelagert (siehe Pfeil) und mittels eines Bügels 12 in einer Position gehalten ist, in welcher der Ring 11 die Kontaktelemente 7 auf Abstand zu den Kontaktflächen 9 hält. Der Bügel 12 ist aus einem Material gefertigt, das sich durch thermische oder elektrische Aktivierung verformt. Die Verformung des Bügels 12 bewirkt eine axiale Verschiebung des Rings 11, so dass die Spannvorrichtung 8 gelöst wird und die Kontaktelemente 7 zur Anlage an den Kontaktflächen 9 gelangen (siehe gestrichelte Linien).

Der Figur 4 ist eine Variante der in der Figur 3 dargestellten Spannvorrichtung 8 zu entnehmen. Statt des Bügels 12 bewirken dünne aktivierbare drahtförmige Elemente 13 die Verschiebung des Rings 11. Die drahtförmigen Elemente 13 sind dabei zwischen dem Ring 11 und einer feststehenden Basis 15 verspannt. Durch eine Aktivierung verkürzt sich die Länge der drahtförmigen Elemente 13 und führt zu einer Verschiebung des Rings 11. Ein Rastelement 14 verhindert eine unbeabsichtigte Verschiebung des Rings 11 vor der Aktivierung des drahtförmigen Elements 13.

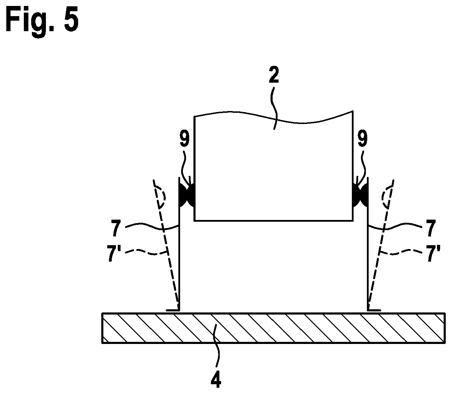

Das in der Figur 5 dargestellte weitere Kameramodul 1 kann besonders einfach nach einem erfindungsgemäßen Verfahren hergestellt werden. Die Darstellung der Figur 5 beschränkt sich auf die zur Durchführung des Verfahrens wesentlichen Teile, und zwar das Objektiv 2 mit den außenumfangseitigen Kontaktflächen 9 sowie die mit der Leiterplatte 4 verbundenen Kontaktelemente 7. Letztere sind aus einem aktivierbaren, insbesondere thermisch oder elektrisch aktivierbaren, Material gefertigt, beispielsweise einem Formgedächtnismaterial. Das Aktivieren des Materials hat zur Folge, dass sich die Kontaktelemente 7 verformen und erst über die Verformung zur Anlage an den Kontaktflächen 9 gelangen.

## Patentansprüche

1. Verfahren zur Herstellung eines Kameramoduls (1), das ein Objektiv (2) mit integrierter Heizeinrichtung sowie ein Gehäuse (3) mit einer Leiterplatte (4) und einem Bildsensor (5) aufweist, umfassend die Schritte:
- Einsetzen des Objektivs (2) in das Gehäuse (3),
- Ausrichten des Objektivs (2) in Bezug auf den Bildsensor (5),
- Fixieren des Objektivs (2) durch Herstellen einer Klebeverbindung (6) mit dem Gehäuse (3),
- elektrisches Kontaktieren der in das Objektiv (2) integrierten Heizeinrichtung,
**gekennzeichnet durch** elektrisches Kontaktieren der in das Objektiv (2) integrierten Heizeinrichtung mit Hilfe vorgespannter und/oder aktivierbarer, insbesondere thermisch oder elektrisch aktivierbarer, Kontaktelemente (7), die durch Lösen einer Spannvorrichtung (8) und/oder durch Aktivieren, insbesondere durch thermisches oder elektrisches Aktivieren, in elektrisch leitenden Kontakt mit außenumfangseitig am Objektiv (2) ausgebildeten Kontaktflächen (9) gebracht werden.

2. Verfahren nach Anspruch 1,
**dadurch gekennzeichnet, dass** als Federarme ausgebildete und/oder sich am Objektiv (2) diametral gegenüberliegende Kontaktelemente (7) verwendet werden, die vorzugsweise andernends mit der Leiterplatte (4) elektrisch leitend verbunden, vorzugsweise verschweißt oder verlötet, sind.

3. Verfahren nach Anspruch 1 oder 2,
**dadurch gekennzeichnet, dass** mit Hilfe der Spannvorrichtung (8) vorgespannte Kontaktelemente (7) verwendet werden und die Spannvorrichtung (8) zumindest bereichsweise
- haken- oder ringförmig ausgeführt ist und/oder
- aus einem Bi-Metall, einem Formgedächtnismaterial, beispielsweise einer Formgedächtnislegierung oder einem Formgedächtnispolymer, oder einem Schrumpfmaterial gefertigt ist.

4. Verfahren nach einem der vorhergehenden Ansprüche,
**dadurch gekennzeichnet, dass** die Spannvorrichtung (8) durch Verschieben und/oder Aktivieren, insbesondere durch thermisches oder elektrisches Aktivieren, gelöst wird.

5. Verfahren nach Anspruch 1 oder 2,
**dadurch gekennzeichnet, dass** aktivierbare, insbesondere thermisch oder elektrisch aktivierbare, Kontaktelemente (7) verwendet werden, die zumindest bereichsweise aus einem Bi-Metall, einem Formgedächtnismaterial, beispielsweise einer Formgedächtnislegierung oder einem Formgedächtnispolymer, oder aus einem Schrumpfmaterial gefertigt sind.

6. Verwendung eines Kontaktelements (7), das zumindest bereichsweise aus einem Bi-Metall, einem Formgedächtnismaterial, beispielsweise aus einer Formgedächtnislegierung oder einem Formgedächtnispolymer, oder aus einem Schrumpfmaterial gefertigt und an einem Ende elektrisch leitend mit einer Leiterplatte (4) verbunden, vorzugsweise verschweißt oder verlötet, ist, in einem Verfahren nach einem der vorhergehenden Ansprüche zur elektrischen Kontaktierung einer in ein Objektiv (2) eines Kameramoduls (1) integrierten Heizeinrichtung.

## Claims

1. Method for producing a camera module (1) which comprises a lens (2) with an integrated heating device, and a housing (3) with a printed circuit board (4) and an image sensor (5), comprising the following steps:
- inserting the lens (2) into the housing (3),
- aligning the lens (2) in relation to the image sensor (5),
- fixing the lens (2) by establishing an adhesive bond (6) to the housing (3),
- electrically contacting the heating device integrated in the lens (2), **characterized by** electrically contacting the heating device integrated in the lens (2) by means of preloaded and/or activatable, in particular thermally or electrically activatable, contact elements (7) which, as a result of releasing a clamping device (8) and/or as a result of activation, in particular thermal or electrical activation, are brought into electrically conductive contact with contact surfaces (9) formed on the outer circumference of the lens (2).

2. Method according to Claim 1,
**characterized in that** use is made of contact elements (7) in the form of spring arms and/or diametrically oppositely situated on the lens (2) which are electrically conductively connected, preferably welded or soldered, preferably at the other end to the printed circuit board (4).

3. Method according to Claim 1 or 2,
**characterized in that** use is made of contact elements (7) that are preloaded by means of the clamping device (8) and the clamping device (8) at least partly
- is in the form of a hook or ring and/or
- is made of a bimetal, a shape memory material, for example a shape memory alloy or a shape memory polymer, or a shrink material.

4. Method according to one of the preceding claims,
**characterized in that** the clamping device (8) is released by means of displacement and/or activation, in particular by means of thermal or electrical activation.

5. Method according to Claim 1 or 2,
**characterized in that** use is made of activatable, in particular thermally or electrically activatable, contact elements (7) which are at least partly made of a bimetal, a shape memory material, for example a shape memory alloy or a shape memory polymer, or a shrink material.

6. Use of a contact element (7) which is at least partly made of a bimetal, a shape memory material, for example a shape memory alloy or a shape memory polymer, or a shrink material and is electrically conductively connected, preferably welded or soldered, at one end to a printed circuit board (4), in a method according to any of the preceding claims for electrically contacting a heating device integrated in a lens (2) of a camera module (1).

## Revendications

1. Procédé de fabrication d'un module de caméra (1), qui comprend un objectif (2) avec un système de chauffage intégré ainsi qu'un boîtier (3) avec une carte de circuits imprimés (4) et un capteur d'image (5), comprenant les étapes :
- insertion de l'objectif (2) dans le boîtier (3),
- alignement de l'objectif (2) par rapport au capteur d'image (5),
- fixation de l'objectif (2) en établissant une liaison adhésive (6) avec le boîtier (3),
- mise en contact électrique avec le système de chauffage intégré dans l'objectif (2),
**caractérisé par** la mise en contact électrique du système de chauffage intégré dans l'objectif (2) à l'aide d'éléments de contact (7) précontraints et/ou activables, en particulier activables thermiquement ou électriquement, qui sont amenés en contact de manière électriquement conductrice avec des surfaces de contact (9) formées sur la périphérie extérieure de l'objectif (2) par desserrage d'un dispositif de serrage (8) et/ou par activation, en particulier par activation thermique ou électrique.

2. Procédé selon la revendication 1,
**caractérisé en ce que** sont utilisés des éléments de contact (7) formés comme des bras élastiques et/ou diamétralement opposés sur l'objectif (2), qui sont de préférence reliés de manière électriquement conductrice, de préférence sont soudés ou brasés, de préférence sur l'autre extrémité à la carte de circuits imprimés (4).

3. Procédé selon la revendication 1 ou 2,
**caractérisé en ce que** sont utilisés des éléments de contact (7) précontraints à l'aide du dispositif de serrage (8) et le dispositif de serrage (8)
- est en forme de crochet ou d'anneau et/ou
- est produit à partir d'un bimétal, d'un matériau à mémoire de forme, par exemple un alliage à mémoire de forme ou d'un polymère à mémoire de forme, ou d'un matériau rétractable au moins par endroits.

4. Procédé selon l'une des revendications précédentes,
**caractérisé en ce que** le dispositif de serrage (8) est desserré par coulissement et/ou activation, en particulier par activation thermique ou électrique.

5. Procédé selon la revendication 1 ou 2,
**caractérisé en ce que** sont utilisés des éléments de contact (7) activables, en particulier activables thermiquement ou électriquement, qui sont produits au moins par endroits à partir d'un bimétal, d'un matériau à mémoire de forme, par exemple un alliage à mémoire de forme ou d'un polymère à mémoire de forme, ou d'un matériau rétractable.

6. Utilisation d'un élément de contact (7), qui est produit au moins par endroits à partir d'un bimétal, d'un matériau à mémoire de forme, par exemple un alliage à mémoire de forme ou d'un polymère à mémoire de forme, ou d'un matériau rétractable et est relié de manière électriquement conductrice, de préférence est soudé ou brasé, sur une extrémité à une carte de circuits imprimés (4), dans un procédé selon l'une des revendications précédentes pour la mise en contact électrique d'un système de chauffage intégré dans un objectif (2) d'un module de caméra (1).
